# EUROPEAN PATENT SPECIFICATION

(11) **EP 0 940 897 B1**
(45) Date of publication and mention of the grant of the patent: **09.04.2008**
(21) Application number: 99200547.0
(22) Date of filing: 25.02.1999
(51) Int. Cl.: H02B 1/21

(54) **A safety adaptor for connecting an electrical device to distribution bars**
Sicherheitsadapter für den Anschluss einer elektrischen Vorrichtung an Sammelschienen
Adaptateur de sécurité pour la connection d'un appareil électrique à des barres omnibus

(30) Priority: 02.03.1998 IT MI980413
(43) Date of publication of application: 08.09.1999
(73) Proprietor: BTICINO S.P.A., 20154 Milano (IT)
(72) Inventor: Passera, Costantino, 20147 Milano (IT)
(74) Representative: Siniscalco, Fabio

(56) References cited:
- EP-A- 0 220 567
- EP-A- 0 331 383
- EP-A- 0 593 399
- EP-A- 0 634 768

## Description

The present invention relates to an adaptor for connecting, to electrical-energy distribution bars, an electrical device of the type which is mounted by being fitted on a rail and which has a clip contact.

An Adoptor with the features of the preamble of claim 1 is enclosed in EPA 0 593 399.

In industrial electrical installations, use is made of electrical-energy distribution bars to which user appliances are connected with the interposition of electrical devices such as switches, knife switches, protection devices, etc. These devices are mostly of the standardized, modular type and are constructed in a manner such that they can be fitted on a supporting rail on which they are arranged side by side to form assemblies which can be made up according to the various requirements of use. The distribution bars, the adaptors, and the electrical devices are housed together in a cabinet to form an electrical distribution board.

In order to couple these devices to the distribution bars, use is made of adaptors which have hooks for coupling to the bars and a rail for supporting the devices. If the device to be fitted on the adaptor has a rear clip contact, the adaptor has a contact terminal projecting from its front wall for engagement in the clip contact of the device. This terminal is connected, inside the body, to a rear terminal disposed in the region of one of the hooks in order to establish an electrical contact with one of the distribution bars. Naturally, when an adaptor is fitted in position on the live distribution bars, its contact terminal is also live so that, if there is no device mounted on the adaptor, the contact terminal is uncovered and constitutes a danger to an operator who has to operate on the board to replace a device for maintenance work or for other operations.

The object of the present invention is to propose an adaptor which does not have the above-described disadvantage.

This object is achieved, according to the invention, by virtue of the fact that the adaptor comprises a covering element of insulating material that is mounted for pivoting on the box-like body and that can adopt a first position in which it covers the contact terminal and a second position in which it leaves the contact terminal uncovered to permit the mounting of an electrical device on the adaptor, and means which act on the covering element to keep it in position on the contact terminal.

Clearly, the adaptor according to the invention affords a high degree of safety from accidental contact since, when there is no device mounted on the adaptor, the contact terminal is completely enclosed in the covering element and this can be removed only intentionally by being moved against the action of the means, for example resilient means, which tend to keep the covering element in the protection position and possibly, in an advantageous embodiment of the invention, by the release of suitable locking means with a suitable tool.

The invention will be understood better from the following detailed description of an embodiment thereof described by way of non-limiting example with reference to the appended drawings, in which:
Figure 1 shows, in perspective and with a portion separated, an adaptor according to the invention, before an electrical switch has been fitted thereon,
Figure 2 shows the adaptor of Figure 1 in perspective with an electrical switch fitted thereon, and
Figure 3 is a perspective view of the adaptor with the covering element in the protection position, before an electrical switch has been fitted thereon.

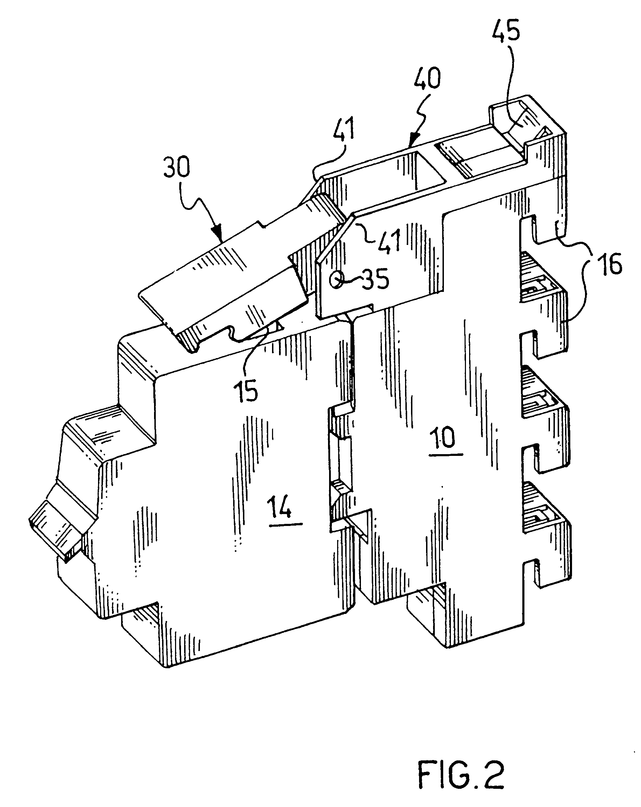

The adaptor is constituted by a flat, box-like body with two relatively large sides and is constituted by two shells of insulating material welded together. The body, indicated 10, has a front wall which is shaped so as to form a double rail 12 for the support and engagement of an electrical device 14 which, in the embodiment shown, is a switch (Figure 2), and a rear wall which is shaped so as to form a plurality of hollow hooks 16 for engaging and bearing on corresponding parallel distribution bars, not shown in the drawings. In the embodiment shown, there are four hooks.

The body 10 houses a metal connector 20 constituted by a metal plate bent and shaped so as to form, at one of its ends, a terminal 22 which projects from the front of the body 10 and, at the opposite end, a U-shaped member 24 disposed inside one of the hooks 16. The terminal 22 constitutes a blade contact for engagement in a clip contact which is not shown in the drawings but is accessible on the rear of the device 14, and the U shaped member 24 constitutes an element for electrical and mechanical connection to a bar. In this embodiment, the connector 20 is intended for contact with the uppermost bar in the drawing but, naturally, it may be formed so as to contact any of the other bars.

According to the invention, the adaptor comprises a covering element of insulating material mounted for pivoting on the body 10. In the embodiment shown in the drawings, this element, indicated 30, is connected to the body 10 of the adaptor by means of a support frame 40 fixed releasably to the body.

The covering element 30 has a box-like structure, is preferably made of moulded plastics material, and has two parallel sides 31 joined together by an upper wall 32 and by transverse walls 33 which define a seat 34 for the contact terminal 22. The covering element 30 is joined to the support frame 40 by means of two aligned pins 35 formed integrally with the box-like structure of the covering element 30.

The support frame 40, which is also preferably made of moulded plastics material, has two sides 41 joined together by transverse walls 42. Two aligned holes 43 in the sides 41 constitute the seats for the pins 35 of the covering element 30. The edges of two opposed portions of the sides 41 are bent inwardly to form two projections 44 which can be inserted in corresponding opposed grooves 19 provided on the sides of the adaptor body 10.

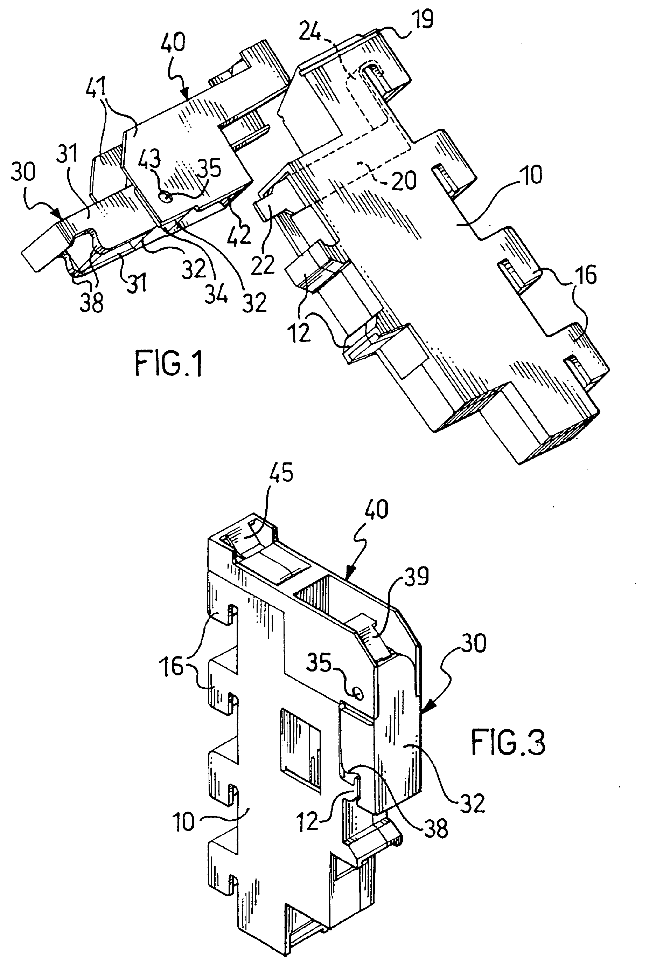

At one end of the support frame 40 (Figures 2 and 3) there is a resilient tab 45, which is preferably formed integrally with the frame and which acts as a locking element by snap-engaging a recess provided on the upper side of the body of the adaptor.

The widths selected for the covering element 30 and for the support frame 40 are such that their sides lie substantially in the same planes as the sides of the body 10 of the adaptor.

The covering element 30 is held in the protection position, that is, with the contact terminal 22 in the seat 34, by a resilient element and by releasable locking means. In the embodiment described, as shown in Figure 3, the resilient element is a tab 39 which is preferably formed integrally with the support frame 40 and the free end of which interferes with a recess provided at one end of the covering element 30. At the opposite end, the covering element 30 has a pair of curved projections 38 formed in the sides 31 for snap-fitting on one of the rails 12 for the mounting of the electrical device 14 on the adaptor. The projections 38 and the rail 12 thus constitute the means for locking the covering element 30.

The locking can be released by pushing the covering element with a suitable tool, for example, a screwdriver inserted between the end edge of the covering element 30 and the adaptor body 10 so as to release the covering element from its engagement. In order to uncover the contact terminal 22, and to enable a device 14 to be fitted on the adaptor, the covering element 30 is pivoted through 90° about its pivot axis. The resilient tab 39 acts on the upper wall of the covering element 30 so as to keep the latter in position.

According to a variant of the invention, instead of the resilient tab 39, a helical spring is disposed on the axis of rotation of the covering element and engages the support frame 40 at one end and the covering element 30 at the other end.

Once the electrical device is fitted on the adaptor, the covering element 30 can be pivoted through a certain angle towards the closure position until it comes into contact with a side wall of the electrical device 14 (Figure 2). In this position, the covering element 30 covers a recess 15 for access to a terminal normally provided for the electrical connection of the device as an alternative to its engagement on the terminal 22.

It is clear from the foregoing that the adaptor according to the invention affords protection against contact with live elements both in the absence of a device mounted on the adaptor, by virtue of the covering of the contact terminal, and with a device mounted thereon, by virtue of the covering of the lateral terminal of the device.

## Claims

1. An adaptor for connecting, to electrical-energy distribution bars, an electrical device (14) of the type which can be fitted on rails and which has a clip contact, the adaptor comprising a box-like body (10) which has a pair of rails (12) disposed on its front wall for the mounting of an electrical device (14), a plurality of hooks (16) on its rear wall for coupling the adaptor to distribution bars, and a contact terminal (22) projecting from its front wall for engagement in the clip contact of the electrical device, **characterized in that** it comprises a covering element (30) of insulating material that is mounted for pivoting on the box-like body (10) and that can adopt a first position in which it covers the contact terminal (22) and a second position in which it leaves the contact terminal (22) uncovered to permit the mounting of an electrical device (14) on the adaptor, and means (39, 38) which act on the covering element (30) to keep it in position on the contact terminal (22).

2. An adaptor according to Claim 1, in which the means which act on the covering element (30) comprise resilient means (39).

3. An adaptor according to Claim 1 or Claim 2, in which the means which act on the covering element (30) comprise releasable locking means (38, 12).

4. An adaptor according to any one of the preceding claims, comprising a frame (40) fixed releasably to the box-like body (10) for supporting the covering element (30), the covering element (30) being mounted for pivoting on the support frame (40).

5. An adaptor according to Claim 4, to the extent that it is dependent on Claim 2, in which the resilient means (39) are fixed to the support frame (40).

6. An adaptor according to Claim 4, to the extent that it is dependent on Claim 2, in which the resilient means comprise a helical spring which engages the support frame (40) at one end and the covering element (30) at the other end.

7. An adaptor according to Claim 4, Claim 5 or Claim 6, in which the box-like body (10) has first fixing means (19) on a side thereof adjacent the front wall, and the support frame (40) of the covering element (30) has second fixing means (44) corresponding to the first.

8. An adaptor according to Claim 7, in which the first fixing means comprise two opposed grooves (19) and the second fixing means comprise two projections (44) which can be inserted for sliding in the opposed grooves.

9. An adaptor according to Claim 8, comprising a further releasable locking element (45) which keeps the support frame (40) in position on the body (10) of the adaptor.

10. An adaptor according to Claim 9, in which the further locking element (45) comprises a resilient tab (45) fixed relative to the support frame and a recess provided in the adaptor body (10).

11. An adaptor according to any one of the preceding claims, starting from Claim 3, in which the releasable locking means (38, 12) comprise a pair of projections (38) which are formed on the covering element (30) and which can be snap-fitted on one of the rails (12) for the mounting of the device (14).

## Patentansprüche

1. Adapter für den Anschluss einer auf Schienen befestigbaren und eine Halteverbindung aufweisenden elektrischen Vorrichtung (14) an Verteilerschienen für elektrische Energie, wobei der Adapter einen gehäuseähnlichen Körper (10) umfasst, der ein an seiner Vorderwand angeordnetes Schienenpaar (12) für die Befestigung einer elektrischen Vorrichtung (14), mehrere Haken (16) an seiner Hinterwand für die Kopplung des Adapters an Verteilerschienen, und einen sich aus der Vorderwand erstreckenden Kontaktanschluss (22) für den Eingriff in die Halteverbindung der elektrischen Vorrichtung aufweist,
**dadurch gekennzeichnet, dass**
der Adapter ein Abdeckelement (30) aus Isoliermaterial, das schwenkbar auf dem gehäuseähnlichen Körper (10) befestigt ist und das eine erste Position, in der der Kontaktanschluss (22) überdeckt wird, und eine zweite Position, in der der Kontaktanschluss (22) nicht überdeckt wird, einnehmen kann, um die Befestigung einer elektrischen Vorrichtung (14) auf dem Adapter zu ermöglichen, und Mittel (38, 39), die zur Beibehaltung seiner Position auf dem Kontaktanschluss (22) auf das Abdeckelement (30) einwirken, umfasst.

2. Adapter nach Anspruch 1, wobei die Mittel, die auf das Abdeckelement (30) einwirken, elastische Mittel (39) umfassen.

3. Adapter nach Anspruch 1 oder Anspruch 2, wobei die Mittel, die auf das Abdeckelement (30) einwirken, abnehmbare Arretierungsmittel (38,12) umfassen.

4. Adapter nach einem der vorangehenden Ansprüche, der einen abnehmbar an den gehäuseähnlichen Körper (10) befestigten Rahmen (40) umfasst, um das Abdeckelement (30) zu stützen, wobei das Abdeckelement (30) schwenkbar an den Stützrahmen (40) befestigt ist.

5. Adapter nach Anspruch 4, in dem von Anspruch 2 abhängigen Umfang, wobei die elastischen Mittel (39) an den Stützrahmen (40) befestigt sind.

6. Adapter nach Anspruch 2 und Anspruch 4, wobei die elastischen Mittel eine spiralförmige Feder aufweisen, die an einem Ende mit dem Stützrahmen (40) und an dem anderen Ende mit dem Abdeckelement (30) verbunden ist.

7. Adapter nach Anspruch 4, Anspruch 5 oder Anspruch 6, wobei der gehäuseähnliche Körper (10) an einer Seite neben der Vorderwand erste Befestigungsmittel (19) und der Stützrahmen (40) des Abdeckelements (30) zweite Befestigungsmittel (44), die den ersten entsprechen, aufweisen.

8. Adapter nach Anspruch 7, wobei die ersten Befestigungsmittel zwei gegenüber liegende Nuten (19) und die zweiten Befestigungsmittel zwei Vorsprünge (44), die verschiebbar in die gegenüber liegenden Nuten einführbar sind, aufweisen.

9. Adapter nach Anspruch 8, der ein weiteres abnehmbares Arretierungselement (45) umfasst, das den Stützrahmen (40) auf dem Körper (10) des Adapters in Position hält.

10. Adapter nach Anspruch 9, wobei das weitere abnehmbare Arretierungselement (45) eine relativ zu dem Stützrahmen befestigte elastische Nase (45) und eine in dem Adapterkörper (10) ausgebildete Vertiefung umfasst.

11. Adapter nach einem der Ansprüche 3 bis 10, wobei das abnehmbare Arretierungsmittel (38, 12) ein Paar Vorsprünge (38) umfasst, die auf dem Abdeckelement (30) vorgesehen und mittels Schnappverschluss auf einer der Schienen (12) zur Befestigung der Vorrichtung (14) angebracht sind.

## Revendications

1. Adaptateur pour connecter, à des barres de distribution d'énergie électrique, un dispositif électrique (14) du type qui peut être monté sur des rails et qui comporte un contact à pince, l'adaptateur comportant un corps (10) analogue à une boîte qui a une paire de rails (12) disposés sur sa paroi avant pour le montage d'un dispositif électrique (14), de multiples crochets (16) sur sa paroi arrière pour accoupler l'adaptateur à des barres de distribution, et une borne de contact (22) faisant saillie de sa paroi avant pour s'engager dans le contact à pince du dispositif électrique, **caractérisé en ce qu'**il comporte un élément de recouvrement (30) en matière isolante qui est monté de façon à pivoter sur le corps (10) analogue à une boîte et qui peut adopter une première position dans laquelle il recouvre la borne de contact (22) et une seconde position dans laquelle il laisse la borne de contact (22) découverte pour permettre le montage d'un dispositif électrique (14) sur l'adaptateur, et des moyens (39, 38) qui agissent sur l'élément de recouvrement (30) afin de le maintenir en position sur la borne de contact (22).

2. Adaptateur selon la revendication 1, dans lequel les moyens qui agissent sur l'élément de recouvrement (30) comprennent des moyens élastiques (39).

3. Adaptateur selon la revendication 1 ou la revendication 2, dans lequel les moyens qui agissent sur l'élément de recouvrement (30) comprennent des moyens de verrouillage libérables (38, 12).

4. Adaptateur selon l'une quelconque des revendications précédentes, comportant un bâti (40) fixé de façon amovible au corps (10) analogue à une boîte pour supporter l'élément de recouvrement (30), l'élément de recouvrement (30) étant monté de façon à pivoter sur le bâti de support (40).

5. Adaptateur selon la revendication 4, dans la mesure où elle dépend de la revendication 2, dans lequel les moyens élastiques (39) sont fixés au bâti de support (40).

6. Adaptateur selon la revendication 4, dans la mesure où elle dépend de la revendication 2, dans lequel les moyens élastiques comprennent un ressort hélicoïdal qui engage le bâti de support (40) par une extrémité et l'élément de recouvrement (30) par l'autre extrémité.

7. Adaptateur selon la revendication 4, la revendication 5 ou la revendication 6, dans lequel le corps (10) analogue à une boîte comporte des premiers moyens de fixation (19) sur un côté de ce corps adjacent à la paroi avant, et le bâti de support (40) de l'élément de recouvrement (30) comporte des seconds moyens de fixation (44) correspondant aux premiers.

8. Adaptateur selon la revendication 7, dans lequel les premiers moyens de fixation comprennent deux gorges opposées (19) et les seconds moyens de fixation comprennent deux saillies (44) qui peuvent être insérées de façon à glisser dans les gorges opposées.

9. Adaptateur selon la revendication 8, comportant un autre élément de verrouillage libérable (45) qui maintient le bâti de support (40) en position sur le corps (10) de l'adaptateur.

10. Adaptateur selon la revendication 9, dans lequel l'autre élément de verrouillage (45) comporte une languette élastique (45) fixée par rapport au bâti de support et un évidement situé dans le corps (10) de l'adaptateur.

11. Adaptateur selon l'une quelconque des revendications précédentes, à partir de la revendication 3, dans lequel les moyens de verrouillage libérables (38, 12) comprennent deux saillies (38) qui sont formées sur l'élément de recouvrement (30) et qui peuvent être encliquetées sur l'un des rails (12) pour le montage du dispositif (14).
